# EUROPÄISCHE PATENTSCHRIFT

(11) **EP 2 907 048 B1**
(45) Veröffentlichungstag und Bekanntmachung des Hinweises auf die Patenterteilung: **09.11.2016**
(21) Anmeldenummer: 13729604.2
(22) Anmeldetag: 12.06.2013
(51) Int. Cl.: G06F 17/27, G01C 21/36, G10L 15/30, G06F 17/28, G10L 13/00, G10L 15/00, G10L 15/26

(54) **KRAFTWAGEN MIT EINEM SPRACHÜBERSETZUNGSSYSTEM**
MOTOR VEHICLE HAVING A SPEECH TRANSLATION SYSTEM
VÉHICULE AUTOMOBILE AVEC SYSTÈME DE TRADUCTION

(30) Priorität: 12.10.2012 DE 102012019994
(43) Veröffentlichungstag der Anmeldung: 19.08.2015
(73) Patentinhaber: Audi AG, 85045 Ingolstadt (DE)
(72) Erfinder: KÜHNE, Marcus, 85051 Ingolstadt (DE)
(74) Vertreter: Brandt, Kai
(86) Internationale Anmeldenummer: PCT/EP2013/001730
(87) Internationale Veröffentlichungsnummer: WO 2014/056555

(56) Entgegenhaltungen:
- EP-A1- 1 507 129
- EP-A2- 1 146 316
- EP-A2- 2 028 061
- DE-A1-102004 006 467
- US-A1- 2005 267 647
- Wolfgang Wahlster: "Mobile Speech-to-Speech Translation of Spontaneous Dialogs: An Overview of the Final Verbmobil System" In: "Verbmobil: Foundations of Speech-to-Speech Translation", 1. Januar 2000 (2000-01-01), Springer Berlin Heidelberg, Berlin, Heidelberg, XP055086572, ISSN: 1431-0066 ISBN: 978-3-66-204230-4 Seiten 3-21, DOI: 10.1007/978-3-662-04230-4_1, Zusammenfassung Abschnitte 1, 2, 4 und 7 Abbildungen 2, 6

## Beschreibung

Die Erfindung betrifft einen Kraftwagen, welcher dazu ausgelegt ist, gesprochene Worte zu erfassen, die in dem Kraftwagen in einer bestimmten Sprache, die hier als Ausgangssprache bezeichnet ist, gesprochen wurden. Diese in der Ausgangssprache gesprochenen Worte werden übersetzt und der übersetzte Sprachinhalt ausgegeben. Ein Kraftwagen mit einem solchen Übersetzungssystem ist beispielsweise aus der US 2005/0086051 A1 bekannt.

Danach werden die in der Ausgangssprache in dem Kraftwagen gesprochenen Worte mittels einer Mikrofoneinrichtung erfasst und zum Erkennen des Sprachinhalts, also des Sinngehalts der Wörter, einer automatischen Spracherkennungseinrichtung für die Ausgangssprache zugeführt. Der von der Spracherkennungseinrichtung erkannte Sprachinhalt wird anschließend einer Übersetzungseinrichtung zum Übersetzen des erkannten Sprachinhalts in eine von der Ausgangssprache verschiedene Zielsprache zugeführt. Mit diesem System ist es möglich, einen Fahrer bei einer Fahrt durch ein fremdsprachiges Land beim Verständnis von Texten, die er auf einem Straßenschild sieht, oder beim Übersetzen von Wörtern zu unterstützen, die er benötigt, um nach dem Weg zu fragen.

Dokument Wolfgang Wahlster: "Mobile Speech-to-Speech Translation of Spontaneous Dialogs: An Overview of the Final Verbmobil System", in "Verbmobil: Foundations of Speech-to-Speech Translation", 1. Januar 2000 , Springer Berlin Heidelberg, Berlin , Heidelberg, XP055086572, ISSN: 1431-0066, ISBN: 978-3-66-204230-4, Seiten 3-21, beschreibt ein System namens "Verbmobil", das ein sprecher-unabhängiges und bidirektionales Sprachübersetzungssystem zur spontane Dialog in mobilen Situationen ist. Das System erkennt gesprochene Eingaben, analysiert und übersetzt diese und äußerst sich schließlich hierzu. Das System kann mit deutscher, englischer und japanischer Sprache umgehen.

Eine Aufgabe der vorliegenden Erfindung ist es, ein System aus der Kombination einer Spracherkennungseinrichtung und einer nachgeschalteten Übersetzungseinrichtung einer insbesondere im Zusammenhang mit einem Kraftwagen vorteilhaften weitergehenden Nutzung zuzuführen.

Die Aufgabe wird durch ein Verfahren gemäß Patentanspruch 1 gelöst. Vorteilhafte Weiterbildungen der Erfindung sind durch die Unteransprüche gegeben.

Auch der erfindungsgemäße Kraftwagen ist wie der gattungsbildende Kraftwagen dazu ausgelegt, in einer Ausgangssprache in dem Kraftwagen gesprochene Worte zu erfassen und zum Erkennen eines Sprachinhalts einer automatischen Spracherkennung für die Ausgangssprache zuzuführen und den von der Spracherkennungseinrichtung erkannten Sprachinhalt einer Übersetzungseinrichtung zum Übersetzen des erkannten Sprachinhalts in eine von der Ausgangssprache verschiedenen Zielsprache zuzuführen.

Der erfindungsgemäße Kraftwagen ist nun in vorteilhafter Weise derart weitergebildet, dass in dem Kraftwagen zwei Personen ein Gespräch führen können, ohne hierbei die Sprache der jeweils anderen Person sprechen zu können.

Hierzu ist der Kraftwagen erfindungsgemäß dazu ausgelegt, das erfindungsgemäße Verfahren durchzuführen, d.h. es werden auch Worte, die in der Zielsprache gesprochen werden, erfasst und zum Erkennen eines Sprachinhalts einer automatischen Spracherkennungseinrichtung für die Zielsprache zugeführt. Der von der Spracherkennungseinrichtung für die Zielsprache erkannte Sprachinhalt wird dann ebenfalls einer Übersetzungseinrichtung zugeführt, die zum Übersetzen des erkannten Sprachinhalts in die Ausgangssprache ausgelegt ist. Es werden während des Gesprächs der Personen die beiden übersetzten Sprachinhalte ausgegeben, also sowohl der von der Ausgangssprache in die Zielsprache übersetze Sprachinhalt als auch der in der Zielsprache gesprochene Sprachinhalt in die Ausgangssprache.

Die jeweilige Übersetzung und Ausgabe erfolgt während des Gesprächs der Personen. Der erfindungsgemäße Kraftwagen weist hierdurch den Vorteil auf, dass sich die beiden Personen unterhalten können und hierbei beispielsweise auf einem Bildschirm des Kraftwagens jeweils ablesen können, was die andere Person gerade gesagt hat.

Es müssen sich aber nicht beide Personen in dem Kraftwagen befinden. So kann der Kraftwagen zwar zum einen ein Mikrofon umfassen, welches dazu ausgelegt ist, die in der Ausgangssprache gesprochenen Worte, die beispielsweise vom Fahrer gesprochen werden können, in dem Fahrgastraum des Kraftwagens zu erfassen. Sitzt nun der Gesprächspartner des Fahrers ebenfalls im Kraftwagen, so werden natürlich auch die in der Zielsprache gesprochenen Worte, also beispielsweise des Beifahrers, ebenfalls über das zumindest eine Mikrofon erfasst. Zusätzlich oder alternativ dazu kann aber auch vorgesehen sein, die in der Zielsprache gesprochenen Worte über eine Mobilfunkeinrichtung des Kraftwagens zu erfassen. Dann ist es dem Fahrer in vorteilhafter Weise ermöglicht, auch mit einem fremdsprachigen Gesprächspartner über das Telefon des Kraftwagens zu kommunizieren.

Wie eingangs erwähnt, gehört zu der Erfindung auch ein Verfahren zum Bereitstellen der beschriebenen automatisierten Simultanübersetzung. Hierbei werden während eines Gesprächs einer Person, also beispielsweise dem Fahrer des Kraftwagens, mit einem Gesprächspartner die von der Person gesprochenen Worte und von dem Gesprächspartner gesprochenen Worte jeweils mindestens einer Spracherkennungseinrichtung zugeführt. Es handelt sich um mindestens eine Spracherkennungseinrichtung, weil auch vorgesehen sein kann, dass stets alle erfassten Worte sowohl der Spracherkennungseinrichtung für die Ausgangssprache als auch derjenigen für die Zielsprache zugeführt werden. Bei den Spracherkennungseinrichtungen kann es sich um solche handeln, wie sie an sich aus dem Stand der Technik bekannt sind und die entsprechend zu einem Erkennungsergebnis angeben können, wie wahrscheinlich es ist, dass ein Wort korrekt erkannt wurde. Durch Vergleichen dieser Angaben beider Spracherkennungseinrichtungen kann dann diejenige Übersetzung genutzt werden, zu der von der Spracherkennungseinrichtung angezeigt wird, dass sie mit der höheren Wahrscheinlichkeit richtig ist. Solche Angaben sind beispielsweise als sogenannte Likelihood-Werte oder Log-Likelihood-Werte verfügbar. So ist es nicht nötig, im Voraus zu wissen, in welcher Sprache ein Wort eigentlich gesprochen worden ist. Genauso kann hierüber die von einer Person verwendete Sprache erkannt werden.

Die erfindungsgemäß ermöglichte, automatisierte Simultanübersetzung weist den Vorteil auf, dass z.B. in einem Taxi ein Taxifahrer, welcher nur die Ausgangssprache spricht, Informationen mit Fahrgästen austauschen kann, die unterschiedliche Zielsprachen sprechen. Der Taxifahrer muss dann nur in dem Übersetzungssystem die Zielsprache einstellen und kann sich beispielsweise erkundigen, wohin die Person, die gerade eingestiegen ist, befördert werden möchte.

Bevorzugt ist bei dem erfindungsgemäßen Kraftwagen hierbei vorgesehen, dass das Konfigurieren des Übersetzungssystems einen möglichst geringen Aufwand erfordert. Hierzu sieht eine Weiterbildung des Kraftwagens vor, dass als die Ausgangssprache eine vom Fahrer des Kraftwagens gesprochene Sprache gewählt wird. Die Sprache des Fahrers wird hierbei z.B. über eine Schlüsselidentifikation des Fahrzeugschlüssels, mittels welchem der Fahrer sich Zugang zum Kraftwagen verschafft oder den Kraftwagen gestartet hat, ausgewertet. Pauschal kann aber auch vorgesehen sein, dass die Ausgangssprache über das Land festgelegt wird, für welches der Kraftwagen zugelassen ist. Der Fahrer muss so nur in Ausnahmenfällen beim Aktivieren des Übersetzungssystems die Ausgangssprache z.B. in einem Konfigurationsmenü einer Bedienschnittstelle des Übersetzungssystems explizit auswählen.

Steigt nun in dem beispielhaft herangezogenen Taxi mit dem erfindungsgemäßen Übersetzungssystem ein neuer Fahrgast ein, so sollte gemäß der oben genannten Prämisse der Erfindung die Konfiguration des Übersetzungssystems möglichst einfach sein. Hierzu sieht eine Weiterbildung des erfindungsgemäßen Verfahrens vor, dass in einer Initialisierungsphase, beispielsweise unmittelbar nach Inbetriebnahme des Übersetzungssystems, zumindest ein gesprochenes Wort erfasst wird, das bevorzugt der neue Fahrgast spricht. Eine Sprache, in welcher das zumindest eine Wort gesprochen wurde, wird dann durch eine Auswahleinrichtung erkannt, welche die erkannte Sprache als die Zielsprache festlegt, für welche entsprechend die geeignete Spracherkennungseinrichtung und/oder die geeignete Übersetzungseinrichtung ausgewählt wird. Unter Umständen merkt so der neue Fahrgast nicht einmal, dass durch seine ersten gesprochenen Worte das Übersetzungssystem konfiguriert wird. Die Auswahleinrichtung kann beispielsweise einen Vergleich von Wahrscheinlichkeitswerten unterschiedlicher Spracherkennungseinrichtungen umfassen, wie er bereits im Zusammenhang mit der Zuführung der gesprochenen Worte zu mehreren Spracherkennungseinrichtungen beschrieben wurde.

Die Ausgabe der jeweils übersetzten Sprachinhalte kann, wie bereits beschrieben, dabei auf eine Anzeigeeinrichtung des Kraftwagens, also beispielsweise eines Bildschirms in der Mittelkonsole, erzeugt werden. Zusätzlich oder alternativ dazu kann auch ein akustisches Sprachsignal mittels einer Text-to-Speech-Sprachausgabeeinrichtung erzeugt werden. Solche Einrichtungen sind an sich aus dem Stand der Technik bekannt und können hier problemlos zur Weiterbildung der Erfindung genutzt werden.

In weiterer Ausgestaltung der Erfindung sieht das Verfahren vor, dass eine bestimmte Übersetzungs-Richtung (also von der Ausgangssprache zur Zielsprache oder von der Zielsprache zur Ausgangssprache) jeweils einer der sich unterhaltenden Personen zugeordnet wird. Hierdurch wird in vorteilhafter Weise vermieden, dass für den Fall, dass beispielsweise der Fahrer Worte nicht in seiner eigenen Sprache, also der Ausgangssprache, sondern in der Zielsprache äußert, durch das Übersetzungssystem keine Rückübersetzung in die Ausgangssprache erfolgt, was keinem der beiden sich unterhaltenden Personen von Nutzen wäre. Insbesondere für den Fall, dass die Ausgabe der Übersetzung als akustisches Sprachsignal erfolgt, kann dies vielmehr zur Verwirrung der Personen führen. Um dies zu vermeiden, wird gemäß der weiteren Ausgestaltung zu einer bestimmten Person festgelegt, dass von dieser Person gesprochene Worte nur von einer der Sprachen in die andere der Sprachen zu übersetzen sind. Mittels einer Überprüfungseinrichtung wird dann jedes Mal, wenn die Person Worte äußert, überprüft, ob die von der Person gesprochenen Worte nicht in der eigenen Sprache (der Ausgangssprache), sondern bereits in der anderen Sprache gesprochen wurden und deshalb eine Übersetzung nicht nötig ist. Ist der Fall gegeben, dass die Übersetzung nicht nötig ist, so wird zu dem zumindest einen Wort in der anderen Sprache die entsprechende Erzeugung einer Ausgabe eines übersetzten Sprachinhalts blockiert. Die für diese Ausführungsform benötigte Überprüfungseinrichtung kann beispielsweise den bereits beschriebenen Vergleich der Wahrscheinlichkeitswerte umfassen, wie sie durch unterschiedliche Spracherkennungseinrichtungen berechnet werden können.

Das Zuordnen einer bestimmten Übersetzungs-Richtung zu einer Person erfordert es, dass gesprochene und beispielsweise mittels eines Mikrofons erfasste Worte bereits einer bestimmten Person zugeordnet werden können. Für den Fall, dass die Simultanübersetzung für eine Telefonverbindung bereitgestellt ist, beispielsweise eine Mobilfunkverbindung, können die Worte sehr einfach anhand der Übertragungsrichtung den jeweiligen Personen zugeordnet werden. Wird die Simultanübersetzung dagegen beispielsweise für zwei Personen in einem Kraftwagen bereitgestellt, deren gesprochene Worte mittels einer Mikrofonanordnung erfasst werden, so kann für die Zuordnung der erfassten Worte zu den Personen eine sogenannte Sprecherortung genutzt werden. Hierzu kann beispielsweise die Einfallsrichtung des Sprachschalls auf die Mikrofonanordnung in an sich bekannter Weise ermöglicht sein, beispielsweise durch richtungsselektives Erfassen des Sprachschalls mittels sogenanntem Beamforming oder durch eine TOA-Auswertung (TOA -Time of arrival) für mehrere Mikrofone der Mikrofonanordnung. Es kann auch eine Sprecherortung über die Auswertung von Bildsignalen einer Kamera ermöglicht sein, anhand welcher beispielsweise Lippenbewegungen der Personen in dem Kraftwagen erkannt werden.

Um einen Dialog zwischen Personen zu ermöglichen, der thematisch und in Bezug auf die Formulierungen möglichst frei durch die Personen bestimmt werden kann, sind ein großes Vokabular der Spracherkennungseinrichtungen und der Übersetzungseinrichtung sowie eine hohe Übersetzungsgüte nötig. Dies wird gemäß einer besonders bevorzugten Ausführungsform des erfindungsgemäßen Verfahrens dadurch erreicht, dass die Spracherkennung und/oder die Übersetzung serverbasiert erfolgt und hierzu die erfassten Worte oder die erkannten Sprachinhalte über eine Mobilfunkverbindung an eine Serveranordnung des Internets übermittelt werden, welche die beiden Spracherkennungseinrichtungen und/oder die Übersetzungseinrichtung aufweist. Unter einer Serveranordnung ist im Zusammenhang mit der Erfindung ein einzelner Server-Computer oder aber auch ein Zusammenschluss mehrerer solcher Server-Computer zu verstehen. Indem die Spracherkennung bzw. die Übersetzung nicht beispielsweise durch ein Infotainmentsystem eines Kraftwagens oder durch ein mobiles Endgerät, wie etwa ein Smartphone, sondern durch eine Serveranordnung durchgeführt wird, stehen ungleich mehr Rechen- und Speicherressourcen für die Ausführung eines komplexen Spracherkennungsprogramms bzw. eines komplexen Übersetzungsprogramms zur Verfügung. Für den Fall, dass bereits die Spracherkennung durch eine Serveranordnung durchgeführt wird, also außerhalb des erfindungsgemäßen Kraftwagens, reich das Übertragen der erfassten Worte (oder eines Teils davon) zu den Spracherkennungseinrichtungen hin aus, um die Übersetzung zu bewirken.

Sollte einmal eine Spracherkennungseinrichtung, die für die Übersetzung bestimmter Worte ausgewählt wurde, nicht in der Lage sein, die automatische Erkennung durchzuführen, so kann hier folgende Weiterbildung des erfindungsgemäßen Verfahrens helfen: In dem Fall, dass durch die zumindest eine für die Übersetzung ausgewählte Spracherkennungseinrichtung angezeigt wird, dass eine automatische Erkennung eines Sprachinhalts zumindest eines bestimmten Wortes nicht erfolgreich war, so wird durch eine Steuerungseinrichtung eine Telefonverbindung zu einem Call-Center für Simultanübersetzungen aufgebaut. Durch eine solche Steuerungseinrichtung, beispielsweise ein Programmmodul, welches das Signal von der Spracherkennungseinrichtung empfängt, kann durch die automatische Weiterleitung zu dem Call-Center ermöglicht werden, dass die sich im Gespräch befindenden Personen nach einer kurzen Verzögerung durch den Aufbau der Telefonverbindung ihr Gespräch mit der Hilfe eines Dolmetschers fortsetzen können.

Das erfindungsgemäße Verfahren eignet sich in besonderer Weise dazu, den erfindungsgemäßen Kraftwagen zu betreiben. Zu der Erfindung gehören aber auch Ausführungsformen des erfindungsgemäßen Verfahrens, welche dazu ausgelegt sind, auf einem mobilen Endgerät, beispielsweise einem Smartphone oder einem Tablet-PC, durchgeführt zu werden, durch die dann ebenfalls z.B. eine serverbasierte Simultanübersetzung für den Benutzer des mobilen Endgeräts bereitgestellt ist. Genauso kann durch das erfindungsgemäße Verfahren eine automatisierte Simultanübersetzung für eine Telefonanlage eines Telefondienstanbieters weitergebildet werden.

Entsprechend gehört zu der Erfindung auch ein Computerprogrammprodukt, welches auf zumindest einem Speichermedium, beispielsweise einer Festplatte oder einem Flash-Speicher, gespeichert ist und welcher dazu ausgelegt ist, bei Ausführung durch eine Datenverarbeitungseinrichtung, insbesondere ein mobiles Endgerät, eine Ausführungsform des erfindungsgemäßen Verfahrens durchzuführen.

Die beschriebenen Ausführungsformen bezogen sich auf die Übersetzung eines Gesprächs, das in zwei unterschiedlichen Sprachen geführt wird. Selbstverständlich gibt es Ausführungsformen des erfindungsgemäßen Kraftwagens und des erfindungsgemäßen Verfahrens, in welchen zwischen mehr als nur zwei Sprachen simultan übersetzt wird und entsprechende Übersetzungen in die übrigen Sprachen ausgegeben werden.

Im Folgenden wird die Erfindung noch einmal genauer anhand eines konkreten Ausführungsbeispiels näher erläutert. Dazu zeigt:
- Fig. 1: einen Fahrgastraum einer bevorzugten Ausführungsform des erfindungsgemäßen Kraftwagens und
- Fig. 2: eine Serveranordnung für eine serverbasierte Simultan- oder Direktübersetzung in den Kraftwagen von Fig. 1.

Die gezeigten Ausführungsbeispiele stellen bevorzugte Ausführungsformen der Erfindung dar.

Bei den im Folgenden erläuterten Beispielen stellen die beschriebenen Komponenten der Ausführungsformen und die beschriebenen Schritte des Verfahrens jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

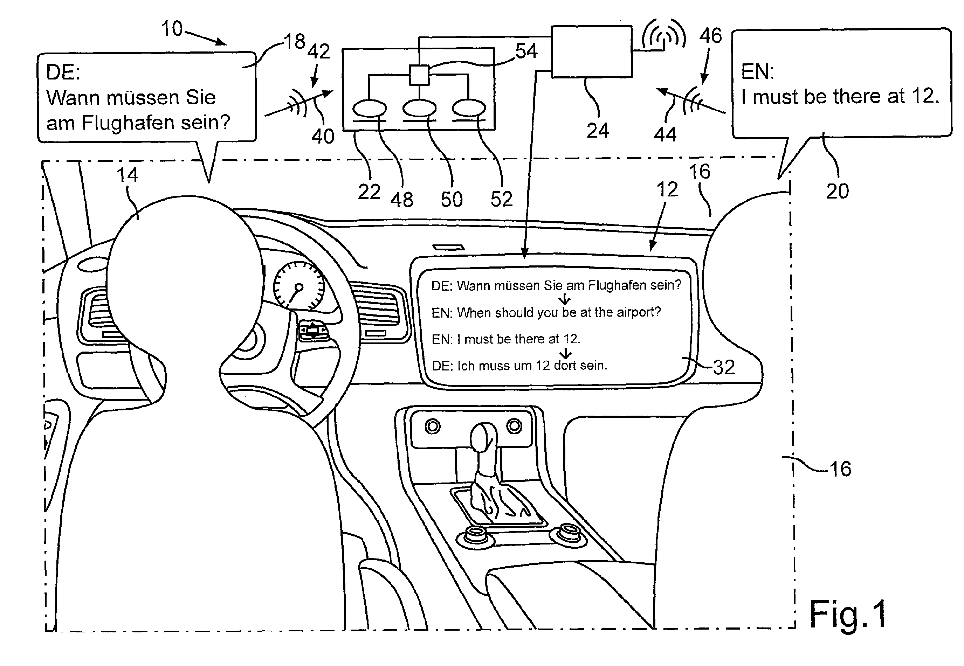

In Fig. 1 ist von einem Kraftwagen 10 ein Fahrgastraum 12 gezeigt, in welchem sich ein Fahrer 14 befindet. Bei dem Kraftwagen 10 kann es sich beispielsweise um einen Personenkraftwagen handeln. Der Kraftwagen 10 kann hierbei beispielsweise als Taxi oder als Geschäftswagen genutzt sein

Der Fahrer 14 spricht mit einem Gesprächspartner 16, der beispielsweise auf dem Beifahrersitz des Kraftwagens 10 sitzen kann oder auch über eine Telefonverbindung von außerhalb des Kraftwagens mit dem Fahrer 14 spricht. Im Folgenden sei angenommen, dass der Gesprächspartner 16 sich im Fahrgastraum 12 befindet. Bei dem Gespräch sprechen der Fahrer 14 einerseits und der Gesprächspartner 16 andererseits nicht dieselbe Sprache. Der Fahrer 14 und der Gesprächspartner 16 können sich dennoch verständigen. Die Sprache des Fahrers 14 wird hier als Ausgangssprache bezeichnet und sei beispielsweise Deutsch (DE). Von dem Gesprächspartner 16 sei angenommen, dass er Englisch (EN) spricht. Allgemein wird die Sprache des Gesprächspartner 16 als Zielsprache bezeichnet.

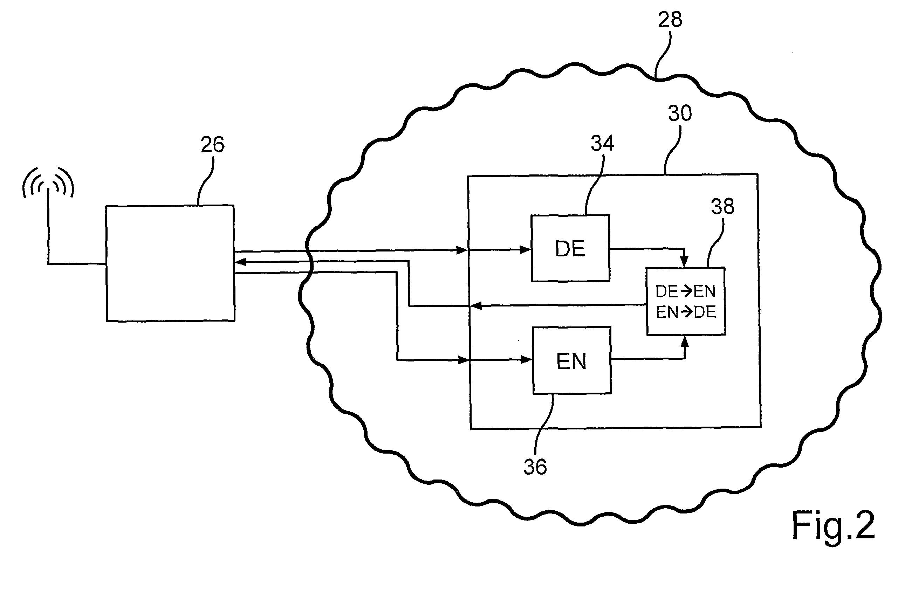

Die von dem Fahrer 14 gesprochene Worte 18 und von dem Gesprächspartner 16 gesprochene Worte 20 werden in dem Fahrgastraum 12 beispielsweise durch eine Mikrofonanordnung 22 erfasst und als elektrische Signale von einer Mobilfunkeinrichtung 24 in ein Mobilfunknetz 26 übertragen (siehe Fig. 2), über welches die Sprachsignale in das Internet 28 und dort zu einer Serveranordnung 30 übertragen werden. Bei der Mobilfunkeinrichtung 24 kann es sich z.B. um ein UMTS- oder ein LTE-Modul handeln. Durch die Serveranordnung 30 werden die Sprachäußerungen des Fahrers 14 und des Gesprächspartners 16 in die jeweils andere Sprache übersetzt und der übersetzte Sprachinhalt wieder von der Serveranordnung 30 zurück zu der Mobilfunkeinrichtung 24 des Kraftwagens 10 übertragen. In dem Kraftwagen 10 werden dann die übersetzten Sprachinhalte beispielsweise von einer Anzeigeeinrichtung 32 als Text auf einem Bildschirm der Anzeigeeinrichtung 32 angezeigt. Es kann auch eine Sprachausgabe mittels einer Text-to-Speech-Sprachausgabeeinrichtung erfolgen.

Um die beschriebene serverbasierte Direktübersetzung in dem Kraftwagen 10 zu ermöglichen, weist die Serveranordnung 30 eine Spracherkennungseinrichtung 34 für die gesprochene Sprache des Fahrers, also hier Deutsch (DE), und eine Spracherkennungseinrichtung 36 für die Sprache des Gesprächspartners 16, also hier Englisch (EN), auf. Die Spracherkennungseinrichtungen 34, 36 können in an sich bekannter Weise ausgestaltet sein. Sie sind in der Lage, die Sprachsignale der beiden Sprecher oder eine komprimierte Form der Sprachsignale, beispielsweise cepstrale Koeffizienten, auf der Grundlage eines Spracherkennungsalgorithmus, der beispielsweise auf Hidden-Markov-Modellen basieren kann, in eine computerlesbare Form, beispielsweise einen Text, umzuwandeln.

Die beiden Spracherkennungseinrichtungen 34, 36 übertragen die erkannten Sprachinhalte an eine Übersetzungseinrichtung 38, die hier beispielhaft als eine einzelne Einheit dargestellt ist (siehe Fig. 2) und die eine kreuzweise Übersetzung von der Ausgangssprache (DE) zur Zielsprache (EN) und von der Zielsprache (EN) zur Ausgangssprache (DE) durchführen kann. Es können für jede Übersetzungsrichtung auch separate Übersetzungseinrichtungen bereitgestellt sein. Die übersetzten Sprachinhalte werden von der Übersetzungseinrichtung 38 über das Internet 28 und das Mobilfunknetz 26 in der bereits beschriebenen Weise zurück an den Kraftwagen 10 übertragen. Die Übersetzungseinrichtung 38 basiert auf einer maschinellen Übersetzung, welche die von den Spracherkennungseinrichtung 34, 36 ausgegebenen Texte aus der jeweiligen Sprache, in welcher die Texte ausgegeben werden, in die andere Sprache übersetzt. Hierzu steht im Stand der Technik eine Vielzahl von Übersetzungsalgorithmen für die Bereitstellung der Übersetzungseinrichtung 38 zur Verfügung. Die Spracherkennungseinrichtungen 34, 36 und die Übersetzungseinrichtung 38 können beispielsweise durch Programmmodule realisiert sein, welche durch einen Prozessor oder mehrere Prozessoren der Serveranordnung 30 ausgeführt werden.

Auch bei dem Kraftwagen 10 können die für die simultane Echtzeit-Übersetzung nötigen Schritte durch ein Programm realisiert werden, welches die Mikrofonanordnung 22, die Mobilfunkeinrichtung 24 und die Anzeigeeinrichtung 30 in der beschriebenen Weise steuert. Es kann sich hier beispielsweise um ein Zusatzprogramm handeln, was in Form einer sogenannten "App" (App - Applikation, Anwendung) von dem Fahrer 14 z.B. über das Internet bezogen und in dem Kraftwagen 10 installiert werden kann. Bei der Mikrofonanordnung 22 und der Anzeigeneinrichtung 32 kann es sich hierbei um bereits durch andere Einrichtungen, beispielsweise eine Freisprechanlage und ein Infotainmentsystem, in dem Kraftwagen 10 bereitgestellte Komponenten handeln, die nun nachträglich durch Installieren des Programms auch für die simultane Echtzeit-Übersetzung genutzt werden können. Für den Fahrer 14 entstehen somit nur sehr geringe zusätzliche Kosten, um die Echtzeit-Übersetzung in seinem Kraftwagen 10 bereitzustellen.

Für den Fahrer 14 ist es bei dem Kraftwagen 10 auch besonders einfach, die simultane Echtzeit-Übersetzung zu aktivieren und auf den Gesprächspartner 16 abzustimmen. Um nicht immer aufwändig die Sprache eines neuen Gesprächspartners konfigurieren zu müssen, kann die Fremdsprache ermittelt werden, indem der Gesprächspartner 16 nach Aktivierung des Übersetzungssystems in der beschriebenen Weise einen ersten Satz spricht. Anhand dieses Satzes kann dann beispielsweise durch die Serveranordnung 30 ermittelt werden, in welcher Sprache dieser Satz mit hoher Wahrscheinlichkeit gesprochen worden ist. Diese Sprache wird dann als Zielsprache für die Simultanübersetzung eingestellt. Als die Komplementärsprache, d.h. die Ausgangssprache des Fahrers 14, bleibt indes bevorzugt immer die Sprache des Fahrers 14 eingestellt, was aber natürlich auch manuell geändert werden kann. Die Sprache des Fahrers kann beispielsweise aus einem Fahrerprofil ausgelesen werden, wie es beispielsweise in einem elektronischen Fahrzeugschlüssel für den Kraftwagen 10 gespeichert sein kann.

Während eines Gesprächs ist eine Übersetzung nicht immer nötig. Wenn der Fahrer 14 in dem oben beschriebenen Szenario beispielsweise einen englischen Satz spricht, versteht ihn der Gesprächspartner 16 unmittelbar. Für diesen Fall kann vorgesehen sein, eine Ausgabe einer entsprechenden Übersetzung, die dann in Deutsch erfolgen würde, zu unterdrücken. Hierzu kann vorgesehen sein, die gesprochenen Worte 18, 20 dem jeweiligen Sprecher, d.h. dem Fahrer 14 bzw. dem Gesprächspartner 16, zuzuordnen und zu überprüfen, ob eine Übersetzung nötig ist. Für die Zuordnung kann beispielsweise vorgesehen sein, eine Einfallsrichtung 40 des Sprachschalls 42 des Fahrers 14 auf die Mikrofonanordnung 22 und entsprechend eine Einfallsrichtung 44 eines Sprachschalls 46 des Gesprächspartners 16 auf die Mikrofonanordnung 22 zu ermitteln. Aus den Einfallsrichtungen 40, 44 kann abgeleitet werden, wer die Worte 18, 20 jeweils ausgesprochen hat. Wird dazu noch überprüft, in welcher Sprache die Worte gesprochen sind, ist klar, ob eine Übersetzung nötig ist. Für die Ermittlung der Einfallsrichtungen 40, 44 kann die Mikrofonanordnung 22 mehrere Mikrofone 48, 50, 52 aufweisen. Eine Auswerteeinrichtung 54, beispielsweise ein Mikrocontroller, kann dann anhand eines Zeitversatzes (Time of arrival - TOA) zwischen den Mikrofonsignalen der Mikrofone 48, 50, 52 ermitteln, aus welcher Einfallsrichtung 40, 44 der jeweilige Sprachschall 42, 46 auf die Mikrofoneinrichtung 22 getroffen ist.

Durch das Beispiel ist gezeigt, wie in einem Kraftwagen eine maschinelle, simultane Echtzeit-Übersetzungsfunktion für ein Gespräch von Personen, die unterschiedliche Sprachen sprechen, ermöglicht werden kann.

## Patentansprüche

1. Verfahren zum Bereitstellen einer automatisierten Simultanübersetzung, wobei die Simultanübersetzung für zwei Personen (14, 16) in einem Kraftwagen (10) bereitgestellt wird, deren gesprochene Worte mittels einer Mikrofonanordnung erfasst werden, und während eines Gesprächs einer der Personen (14) mit der anderen Person (16) als Gesprächspartner (16) von der Person (14) gesprochene Worte (18) und von dem Gesprächspartner (16) gesprochene Worte (20) jeweils mindestens einer Spracherkennungseinrichtung (34, 36) zugeführt werden, ein durch die jeweilige Spracherkennungseinrichtung (34, 36) erkannter Sprachinhalt einer Übersetzungseinrichtung (38) zugeführt wird und der übersetzte Sprachinhalt zumindest an die jeweils andere Person (14, 16), an welche die Worte (18, 20) gerichtet sind, ausgegeben wird, wobei die Spracherkennung serverbasiert erfolgt und hierzu die erfassten Worte (18, 20) über eine Mobilfunkverbindung (24, 26) an eine Serveranordnung (30) des Internets (28) übermittelt werden, durch welche die beiden Spracherkennungseinrichtungen (34, 36) und die Übersetzungseinrichtung (38) bereitgestellt werden, wobei durch die Übersetzungseinrichtung (38) die erkannten Sprachinhalte von den Spracherkennungseinrichtungen (34, 36) empfangen und die übersetzten Sprachinhalte an den Kraftwagen (10) übermittelt werden,
wobei für eine Zuordnung der erfassten Worte zu den Personen (14, 16) eine Sprecherortung durchgeführt wird und zu einer bestimmten der Personen (14, 16) festgelegt wird, dass von der Person (14, 16) gesprochene Worte (18, 20) nur von einer der Sprachen (DE, EN) in die andere der Sprachen (EN, DE) zu übersetzen sind,
**dadurch gekennzeichnet, dass**
die Sprecherortung eine Einfallsrichtung des Sprachschalls auf die Mikrofonanordnung oder Bildsignale einer Kamera auswertet, und mittels einer Überprüfungseinrichtung (54) jedes Mal, wenn die Person Worte äußert, überprüft wird, ob die von der Person (14, 16) gesprochenen Worte nicht in der eigenen, sondern in der anderen Sprache gesprochen wurden und deshalb eine Übersetzung nicht nötig ist, und gegebenenfalls zu diesen Worten eine Erzeugung einer Ausgabe eines in die Sprache der Person übersetzten Sprachinhalts blockiert wird.

2. Verfahren nach Anspruch 1, wobei die Ausgabe des übersetzten Sprachinhalts als Schriftzug auf einer Anzeigeinrichtung (32) eines Kraftwagens (10) und/oder als ein akustisches Sprachsignal mittels einer Text-to-Speech-Sprachausgabeeinrichtung erzeugt wird.

3. Verfahren nach Anspruch 1 oder 2, **dadurch gekennzeichnet, dass** in einer Initialisierungsphase zumindest ein gesprochenes Wort erfasst wird und eine Sprache (EN), in welcher das zumindest eine Wort gesprochen wurde, durch eine Auswahleinrichtung erkannt wird und die erkannte Sprache (EN) als eine Zielsprache für eine Auswahl einer der Spracherkennungseinrichtungen (36) und/oder der Übersetzungseinrichtung (38) festgelegt wird.

4. Verfahren nach einem der Ansprüche 1 bis 3, **dadurch gekennzeichnet, dass** in dem Fall, dass durch zumindest eine der Spracherkennungseinrichtungen (34, 36) angezeigt wird, dass eine automatische Erkennung eines Sprachinhalts zumindest eines bestimmten Wortes nicht erfolgreich war, durch eine Steuerungseinrichtung eine Telefonverbindung zu einem Call-Center für Simultanübersetzungen aufgebaut wird.

5. Computerprogrammprodukt, umfassend einen Programmcode, welcher auf zumindest einem Speichermedium des Computerprogrammprodukts gespeichert ist und welcher dazu ausgelegt ist, bei einer Ausführung durch eine Datenverarbeitungseinrichtung, insbesondere ein mobiles Endgerät, ein Verfahren nach einem der Ansprüche 1 bis 4 durchzuführen.

## Claims

1. Method for providing an automatic simultaneous translation, wherein the simultaneous translation is provided for two persons (14, 16) in a motor vehicle (10), whose words are detected via a microphone arrangement, and, during a conversation of one of the persons (14) with the other person (16) as a conversation partner (16), words (18) spoken by the person (14) and words (20) spoken by the conversation partner (16) are fed to at least one respective speech recognition device (34, 36), a speech content recognized by the respective speech recognition device (34, 36) is fed to a translation device (38), and the translated speech content is output to the respective other person (14, 16), to which the words (18, 20) are directed, wherein the speech recognition is server based and, therefor, the detected words (18, 20) are transmitted via a wireless connection (24, 26) to a server arrangement (30) of the internet (28), by which both the speech recognition devices (34, 36) and the translation device (38) are provided, wherein the recognized speech contents from the speech recognition device (34, 36) are received by the translation device (38), and the translated speech contents are transmitted to the motor vehicle (10),
wherein, for allocating the detected words to the persons (14, 16), a speaker localization is carried out and it is determined for one of the persons (14, 16) that words (18, 20) spoken by that person (14, 16) are only to be translated from one of the languages (DE, EN) into the other of the languages (EN, DE),
**characterized in that**
the speaker localization evaluates an input direction of the speech sound to the microphone arrangement or image signals of a camera, and, via a control device (54), it is checked each time a word is spoken by the person, whether the words spoken by the person (14, 16) are spoken not in the language of the person, but in the other language, and therefore a translation is not necessary, and in this event generating an output of speech content translated into the language of the person is blocked for these words.

2. Method according to claim 1, wherein the translated speech content is output as text on a display device (32) of a motor vehicle (10) and/or is generated as an acoustic speech signal via a text-to-speech output device.

3. Method according to claim 1 or 2, **characterized in that** at least one spoken word is detected in an initialisation phase and, via a selection device, a language (EN), in which the at least one word was spoken, is recognized and the recognized language (EN) is determined as a target language for selecting one of the speech recognition devices (36) and/or the translation device (38).

4. Method according to any of claims 1 to 3, **characterized in that**, via a control device, a telephone connection to a call centre for simultaneous translations is established in the event that at least one of the speech recognition devices (34, 36) indicates that an automatic recognition of a speech content of at least one particular word was unsuccessful.

5. Computer program product comprising a program code, which is stored on at least one storage medium of the computer program product and is configured to carry out a method according to any of claims 1 to 4 when executed by a data processing device, in particular a mobile device.

## Revendications

1. Procédé pour fournir une traduction simultanée automatisée, la traduction simultanée étant fournie pour deux personnes (14, 16) dans un véhicule automobile (10) dont les paroles sont acquises au moyen d'un dispositif de microphone et des mots (18) prononcés pendant une conversation de l'une des personnes (14) avec l'autre personne (16) comme interlocuteur (16) de la personne (14) et des mots (20) prononcés par l'interlocuteur (16) étant envoyés à chaque fois à au moins un dispositif de reconnaissance vocale (34, 36), un contenu vocal reconnu par le dispositif de reconnaissance vocale respectif (34, 36) étant envoyé à un dispositif de traduction (38) et le contenu vocal traduit étant délivré au moins à l'autre personne respective (14, 16) à laquelle les mots (18, 20) sont adressés, la reconnaissance vocale s'effectuant sur la base d'un serveur et les mots acquis (18, 20) étant transmis à cet effet par l'intermédiaire d'une liaison de radiocommunication mobile (24, 26) à un dispositif serveur (30) de l'internet (28), dispositif serveur par lequel les deux dispositifs de reconnaissance vocale (34, 36) et le dispositif de traduction (38) sont fournis, les contenus vocaux reconnus par les dispositifs de reconnaissance vocale (34, 36) étant reçus par le dispositif de traduction (38) et les contenus vocaux traduits étant transmis au véhicule automobile (10),
selon lequel, pour une association des mots acquis aux personnes (14, 16), on effectue une localisation de locuteur et, pour une certaine personne déterminée (14, 16), on spécifie que des mots (18, 20) prononcés par la personne (14, 16) ne sont à traduire que de l'une des langues (DE, EN) vers l'autre langue (EN, DE),
**caractérisé en ce que** la localisation de locuteur évalue une direction d'incidence de l'onde de parole sur le dispositif de microphone ou des signaux d'image d'une caméra et, au moyen d'un dispositif de vérification (54), on vérifie à chaque fois que la personne prononce des mots si les mots prononcés par la personne (14, 16) n'ont pas été prononcés dans sa propre langue mais dans l'autre langue, une traduction étant alors inutile et le cas échéant, pour ces mots, une production d'une sortie d'un contenu vocal traduit dans la langue de la personne étant bloquée.

2. Procédé selon la revendication 1, selon lequel la sortie du contenu vocal traduit est produite sous forme écrite sur un dispositif d'affichage (32) d'un véhicule automobile (10) et/ou sous forme de signal vocal sonore au moyen d'un dispositif de sortie vocale texte-vers-parole.

3. Procédé selon la revendication 1 ou 2, **caractérisé en ce que**, dans une phase d'initialisation, au moins un mot prononcé est acquis et une langue (EN) dans laquelle l'au moins un mot a été prononcé est reconnue par un dispositif de sélection et la langue reconnue (EN) est spécifiée comme langue cible pour une sélection d'un des dispositifs de reconnaissance vocale (36) et/ou du dispositif de traduction (38).

4. Procédé selon l'une des revendications 1 à 3, **caractérisé en ce que**, dans le cas où au moins l'un des dispositifs de reconnaissance vocale (34,36) indique qu'une reconnaissance automatique d'un contenu vocal d'au moins un mot déterminé a échoué, une liaison téléphonique vers un centre d'appels pour traduction simultanée est établie par un dispositif de commande.

5. Produit formant programme informatique, comprenant un code de programme, qui est mémorisé sur au moins un support de mémorisation du produit formant programme informatique et qui est conçu pour, lors d'une exécution par un dispositif de traitement de données, notamment un terminal mobile, mettre en oeuvre un procédé selon l'une des revendications 1 à 4.
